# EUROPÄISCHE PATENTSCHRIFT

(11) **EP 2 710 615 B1**
(45) Veröffentlichungstag und Bekanntmachung des Hinweises auf die Patenterteilung: **04.03.2015**
(21) Anmeldenummer: 12737704.2
(22) Anmeldetag: 16.05.2012
(51) Int. Cl.: C01G 23/00, C04B 35/465, C04B 35/468, C04B 35/47, C04B 35/49, C04B 35/491, C04B 35/622, C04B 35/624, C04B 35/626, H01C 7/02

(54) **VERFAHREN ZUR HERSTELLUNG EINES HALBLEITERKERAMIKMATERIALS, HALBLEITERKERAMIKMATERIAL UND EIN HALBLEITER-BAUELEMENT**
METHOD FOR PRODUCING A SEMICONDUCTOR CERAMIC MATERIAL, SEMICONDUCTOR CERAMIC MATERIAL AND A SEMICONDUCTOR COMPONENT
PROCÉDÉ DE PRODUCTION D'UN MATÉRIAU CÉRAMIQUE SEMI-CONDUCTRICE, MATÉRIAU CÉRAMIQUE SEMI-CONDUCTRICE, ET COMPOSANT SEMI-CONDUCTEUR

(30) Priorität: 18.05.2011 DE 102011050461
(43) Veröffentlichungstag der Anmeldung: 26.03.2014
(73) Patentinhaber: Forschungszentrum Jülich GmbH, 52425 Jülich (DE)
(72) Erfinder: PITHAN, Christian, 52428 Jülich (DE); KATSU, Hayoto, 52428 Jülich (DE); WASER, Rainer, 52076 Aachen (DE); DORNSEIFFER, Jürgen, 52070 Aachen (DE)
(74) Vertreter: Naeven, Ralf
(86) Internationale Anmeldenummer: PCT/DE2012/100143
(87) Internationale Veröffentlichungsnummer: WO 2012/155900

(56) Entgegenhaltungen:
- WO-A1-02/064863
- JP-A- 1 143 201

## Beschreibung

Die Erfindung betrifft ein Verfahren zur Herstellung eines Halbleiterkeramikmaterials mit einem nichtlinearen elektrischen Widerstand mit positivem Temperaturkoeffizienten, ein Halbleiterkeramikmaterial gemäß dem Oberbegriff des Anspruchs 12 sowie ein Halbleiter-Bauelement.

Nichtlineare PTC-Widerstände, oder auch PTC-Thermistoren genannt, weisen einen elektrischen Widerstand mit positivem Temperaturkoeffizienten, abgekürzt PTC (positive temperature coefficient), auf, der mit steigender Temperatur oberhalb einer Schwellentemperatur sprunghaft um bis zu sieben Größenordnungen reproduzierbar ansteigt. Derartige Widerstände werden daher primär zum Schutz integrierter Schaltungen vor Überlastspitzen durch Strombegrenzung aber auch beispielsweise in der Temperatursensorik und als selbst regulierende Heizelemente genutzt. Die Schwellentemperatur ist abhängig vom Material des Thermistors und kann in einem Temperaturbereich von z. B. 0° C bis 200° C eingestellt werden.

Für die Herstellung der Funktionsschichten in Thermistoren wird insbesondere keramisches und ferroelektrisches donatordotiertes Halbleitermaterial mit Perowskitstruktur der allgemeinen Formel ABO₃, vorzugsweise Bariumtitanat (BaTiO₃), eingesetzt, wobei die Positionen A und B gleichzeitig verschiedene Elemente aufweisen können, z.B. die A-Position die Erdalkalimetalle Barium und Strontium oder neben Barium und Strontium auch Alkalimetalle und Bismuth und die B-Position Titan und Zirkonium. Eine Alkalimetalle und Bismuth aufweisende Halbleiterkeramik der vorgenannten Strukturformel ist in der WO 2010/038770 mit der allgemeinen Formel (Ba_{1-x-y-z}Sr_{y}(A1Bi)ₓA2_{z})TiO₃ offenbart, wobei A1 für ein Alkalimetall und A2 für ein Element der Seltenen Erden steht und für x, y und z gilt: 0.03 ≤ x ≤ 0.20, 0.02 ≤ y ≤ 0.20, 0.0005 ≤ z ≤ 0.015 und x - 0.10 ≤ y ≤ (5/4)·x. Die Funktionsschichten von Thermistoren können alternativ auch aus organischem Material, insbesondere aus isolierenden Polymeren oder Harzen bestehen, in die ein elektrisch leitendes Material eingebettet ist.

Aus der US 2001/0003361 A1 sind ein Verfahren, ein Halbleiterkeramikmaterial sowie ein Halbleiter-Bauelement der Eingangs genannten Art bekannt. Das Halbleiter-Bauelement ist in einer Vielschichtbauweise aufgebaut und besteht aus einer Abfolge von dünnen keramischen donatordotierten halbleitenden Bariumtitanat-Lagen und metallischen Elektrodenschichten. Die Elektrodenschichten aus Nickel oder Palladium sind derart miteinander elektrisch verbunden, dass die Widerstandsschichten parallel zueinander geschaltet sind und somit der unterhalb der Schwellentemperatur gegebene elektrische Gesamtwiderstand den Anforderungen entsprechend gering ist. Zur Herstellung einer dotierten Halbleiterkeramik offenbart die US 2001/0003361 A1 ein Mischoxid-Verfahren, bei dem BaCO₃, TiO₂, Sm_{2O3}, MnCO₃, und SiO₂ als Rohmaterialien miteinander vermischt und gemahlen und anschließend kalziniert werden. Nach einem Sintern bei mindestens 1.225° C in einer H₂/N₂-Atmosphäre wird das dann Halbleitereigenschaften aufweisende Keramikmaterial bei 1.000° C einer LuftAtmosphäre ausgesetzt, so dass dessen Korngrenzen reoxidiert werden. Des Weiteren offenbart die US 2001/0003361 A1 im Zusammenhang mit der Herstellung eines Bauelements in Vielschichtbauweise, die Halbleiterkeramik nach dem Kalzinieren und dem Vermischen mit einem organischen Binder in dünne Bahnen zu formen und jeweils mit einer Ni-Elektrode zu versehen. Die Ni-beschichteten Keramikbahnen werden aufeinander geschichtet, um das resultierende Laminat anschließend bei Temperaturen von mindestens 1.200°C zu sintern.

Aus der US 7,075,408 B2 ist ebenfalls ein Halbleiter-Bauelement der Eingangs genannten Art bekannt, bei dem das Laminat auf BaTiO₃-Basis bei Temperaturen von 1.300°C gesintert wird.

Für die Herstellung des PTC-Widerstandsmaterials werden im allgemeinen Stand der Technik bevorzugt Mischoxid-Verfahren in der Art des vorbeschriebenen Verfahrens eingesetzt. Dabei werden einfachere Vorläuferoxide und Vorläuferkarbonate, wie z. B. BaCO₃, TiO₂, SrCO₃, SE₂O₃ (SE = Metall der Seltenen Erden), durch Mischen, Malen und reaktives Kalzinieren in die gewünschte Materialformulierung gebracht. Das Funktionsmaterial weist nach dem Kalzinieren eine Perowskit-Struktur der Form ABO₃ mit einer Erdalkalimetallkomponente, zumeist Barium, an der A-Position und insbesondere Titan an der B-Position, auf. Die Metalle der Seltenen Erden dienen als Donatoren.

Als Alternativen sind nasschemische Verfahren, wie Sol-Gel basierte Methoden oder wie beispielsweise die Oxalat-Route, bekannt, bei denen die Pulver oder Präkursoren, wie z. B. Ba, Ti-Oxalat, durch chemische Fällung aus einer Lösung ausgeschieden werden.

Bei den Methoden des Standes der Technik wird sowohl beim Mischoxid-Verfahren als auch bei den nasschemischen Verfahren bei den Ausgangsmaterialien ein nichtstöchiometrisches Verhältnis der Erdalkalikomponente zu Titan eingesetzt, um das gewünschte nichtlineare Widerstandsverhalten des PTC-Widerstands zu erreichen. Ein Titanüberschuss wird im Stand der Technik für die Herstellung von Bulkmaterial eingesetzt, während ein Ba-Überschuss bei der Herstellung von Halbleitermaterial für die Vielschicht-Bauweise gewählt wird, da der Ba-Überschuss ein beim Sintern auftretendes Kornwachstum auf etwa 1 µm bis 3 µm begrenzt und somit die Ausbildung dünner Schichten mit einer Dicke im Supermikrometerbereich ermöglicht.

Aus den hergestellten Rohpulvern werden üblicherweise Schichten durch Folienziehen oder Gießen hergestellt, die anschließend mittels Metallisierung mit Elektroden versehen und zu Vielschicht-Elementen laminiert werden. Hiernach erfolgt die Sinterung unter reduzierenden Bedingungen bei Temperaturen in der Regel oberhalb von 1300° C und typischerweise bei einem Sauerstoffpartialdruck unterhalb 10⁻⁷ atm.

Als Donatoren für das Halbleitermaterial kommen grundsätzlich alle Elemente der Seltenen Erden unterhalb einer Konzentration von 0.5 Atom-% in Frage. Zu einem Donator- oder Akzeptorstoff genannte Konzentrationsangaben in Atomprozent sind stets entweder auf die Gesamtheit der A-Plätze oder die der B-Plätze bezogen, je nachdem, welche Atomsorte von dem Stoff zu ersetzen ist. Die WO 201038770 offenbart als Donatoren auch Niob, Tantal und Antimon, die JP 2009177017 offenbart darüber hinaus auch Yttrium als Donator. Die jeweilige Donatorquelle wird im Mischoxid-Verfahren vor dem Kalzinieren eingebracht.

Um eine Verdichtung des Materials zu erleichtern, werden üblicherweise Sinterhilfsmittel wie SiO₂ oder TiO₂ zugesetzt, die bei Sintertemperatur eine relativ niedrig schmelzende flüssige Phase bilden (Flüssigphasensinterung) und durch Auf- und Umlösungsvorgänge die Konsolidierung des Materials unterstützen. Während der Sinterung erfolgt der Einbau der Donatoren durch Diffusion in das Innere der Körner. Die Parameter des Sinterprozesses, insbesondere eine für die Diffusion der Donatoratome hinreichende Temperatur und Sinterdauer, sind mitentscheidend für den Einbau der Donatoratome in der gewünschten Konzentration und Verteilung.

Im Anschluss an die Sinterung werden im Stand der Technik beim Abkühlvorgang oder in einem Nachtemperschritt bei Temperaturen zwischen 700° C und 1200° C die Korngrenzen innerhalb des Gefüges durch Erhöhung des Sauerstoffpartialdruckes vorsichtig reoxidiert, wodurch die Korngrenzen elektrisch isolierend werden, aber das Korninnere seine halbleitenden Eigenschaften beibehält. An den auf beiden Seiten der Korngrenze entstehenden elektrisch isolierenden internen Grenzflächen bilden sich Schottky-Doppelbarrieren aus, die den PTC-Effekt mit der gewünschten Nichtlinearität des elektrischen Widerstandes generieren.

Es ist bekannt, bei PTC-Widerstandsmaterialien auf BaTiO₃-Basis als weitere Dotierstoffe Akzeptoren vorzusehen, wie z. B. die Übergangsmetalle Mn, Fe, Cr, oder Ni. Diese führen in der Regel zu einer deutlichen Erhöhung der Sprunghöhe des elektrischen Widerstandes oberhalb der Schwellentemperatur durch Erhöhung der Schottky-Barrieren. Die Akzeptordotierung erfolgt in der Regel in geringen Mengen von maximal 0.1 Atom-%.

Die im Stand der Technik bekannten Schichtdicken betragen typischerweise 20 µm, wobei das Material Korngrößen im Mikrometer-Bereich aufweist. Die Dicken der Vielschicht-Thermistoren betragen dementsprechend ein Vielfaches der einzelnen Schichtdicken. Die fortschreitende Miniaturisierung von elektrischen Schaltkreisen erzeugt jedoch den Wunsch nach entsprechend dünnen Vielschicht-Thermistoren, die nur durch eine weitere Reduzierung der PTC-Widerstandsschichtdicken erreicht werden kann. Vielschicht-Thermistoren im unteren Mikrometer-Bereich mit entsprechender submikroner Körnung des PTC-Widerstandsmaterials konnten bislang jedoch noch nicht hergestellt werden.

So galt in der Fachwelt die physikalische Verwirklichung des PTC-Widerstandeffektes in sehr feinkörnigen donatordotierten Keramiken auf BaTiO₃-Basis mit einer Korngröße unterhalb 1 µm als nicht möglich (siehe S.-H. Cho: "Theoretical aspects of PTC thermistors", J. Kor. Ceram. Soc. 43 (2006) 673). Dabei ging man davon aus, dass bereits beim Sintern oberhalb von 1200° C aufgrund der Kornwachstumsanomalie solche feinkörnigen Keramiken nicht im halbleitenden Zustand erhalten werden können.

Als erstes Hindernis für eine submikrone Größe der Körner im Fertigprodukt wird das beim Sintern auftretende Kornwachstum angesehen. So sorgen bei Sinterung unter reduzierender Atmosphäre beim Ausbau von Sauerstoff aus dem Kristallgitter unter Freisetzung von freien Elektronen Rekristallisationserscheinungen für ein Kornwachstum zu Korngrößen bis auf viele 100 µm. Würde hingegen unter oxidierenden Bedingungen gesintert, wäre die Konzentration der Donatoren auf einen Bereich unterhalb von 0,4 Atom-% begrenzt, da oberhalb dieser Konzentration elektrisch isolierende Keramiken entstehen. Des Weiteren käme es in diesem Bereich geringer Donatorzusätze auch generell zu einem verstärkten Wachstum der Körner, was ebenfalls der Herstellung submikroner Körnergrößen entgegensteht.

Des Weiteren führen im Stand der Technik eingesetzte nichtstöchiometrische Zusammensetzungen mit einem Überschuss an TiO₂ als Sinterhilfe in der Regel ebenfalls zu Kornwachstum. Überschüssiges BaO kann allerdings zu einer Begrenzung des Kornwachstums auf ca. 1 µm bis 3µm während des Sintervorganges führen, was jedoch für submikrone Schichtdicken ebenfalls nicht ausreichend ist.

Des Weiteren ging die Fachwelt davon aus, dass der geforderte Widerstandssprung bei submikroner Körnung, wenn Sie denn nach dem Sintern vorliegen würde, nicht erreicht werden könnte, weil in derartig kleinen Körnern die beim Reoxidieren auftretenden Schottky-Barrieren einander überlappen und damit die Körner die notwendige halbleitende Eigenschaft in ihrem Inneren verlieren würden. Die Begründung hierfür wird im Folgenden näher dargestellt.

Bei der Sintertemperatur werden aufgrund der Elektroneutralitätsbedingungen die zusätzlichen positiven elektrischen Ladungen der eingelagerten Donator-Ionen überwiegend durch Elektronen kompensiert, und die Keramik wird halbleitend. Während der Abkühlungsphase in Luft oder unter erhöhtem O₂-Partialdruck erfolgt an der Korngrenze bei Temperaturen zwischen 1200° C und 700° C eine Re-Oxidation der beim Sinterprozess gebildeten Tᵢ³⁺-Ionen zu T⁴⁺-Ionen. An den Korngrenzen werden die positiven Ladungen der Donatoren lokal durch Metallleerstellen kompensiert. Dieser Kompensationsmechanismus kann bei geeigneten Reoxidationsbedingungen auf den Bereich der Korngrenzen beschränkt werden, da die Diffusion von Metallleerstellen ins Korninnere sehr langsam verläuft. Die wie Akzeptor-Zustände wirkenden negativen Ladungen der Metallleerstellen tragen zur Bildung einer doppelten Schottky-Barriere an den Korngrenzen bei, wodurch dort eine isolierende Raumladungszone entsteht, während im Korninneren auch nach dem Abkühlen halbleitende Bereiche vorliegen. Die Schottky-Barriere an der Korngrenze und die halbleitende Eigenschaft im Korninneren sind notwendig für den Sprung im temperaturabhängigen elektrischen Widerstand des Thermistors.

Der für die Ausbildung der Schottky-Barriere verantwortliche Mechanismus ist zwar grundsätzlich auch unterhalb 700° C bis zu einer Temperatur von etwa 500° C aktiv. Ausgehend von den im Stand der Technik bekannten Korngrößen von mehr als 1 µm sind jedoch die in diesem Temperaturbereich resultierenden Schottky-Barrieren unter technischen Auslagerungs- oder Abkühlbedingungen nicht ausgeprägt genug, um einen ausreichenden PTC-Widerstandssprung zu erzeugen. Unterhalb 500° C ist die Metallleerstellenkompensation vollständig eingefroren.

Gemäß Wernicke und Daniels ("New aspects of an improved PTCR-Model", Philips Res. Rpt. 31 (1976) 544 bis 551) wird die Breite der elektrisch isolierenden Korngrenzrandschicht, die die halbleitenden Bereiche voneinander trennt, durch den Diffusionskoeffizienten der Metallleerstellen und die Abkühlrate bestimmt. Aus diesen Betrachtungen folgt, dass unter üblichen Abkühlungsbedingungen von 5° C/min bis 50° C/min die Breite der isolierenden Kornrandschicht etwa 1 bis 3 µm dick ist. Nach dem von Daniels und Wernicke vorgeschlagenen Modell muss davon ausgegangen werden, dass bei sehr feinkörnigen Keramiken mit Korngrößen kleiner als 1 µm die während des Reoxidationsprozesses erzeugten isolierenden Raumladungszonen überlappen und die Funktionsschicht somit vollkommen durchoxidiert und elektrisch isolierend wird. Der damit verbundene Verlust des halbleitenden Kerns im Korninneren führt auch zum Verlust der PTC-Eigenschaften dieser Keramiken. Entsprechende Betrachtungen folgen aus der Modellierung der Schottky-Doppelbarrieren aus elektrostatischer Sicht, ausgehend von der Poisson-Gleichung, die in der Regel eine Breite der Barriere von wenigen µm voraussagt.

Zusammenfassend scheiterte bislang die Herstellung von keramischen Funktionsschichten aus Materialien mit submikroner Körnung und einem mit dem Stand der Technik vergleichbaren Widerstandssprung in der Temperaturcharakteristik daran, dass bei den verwendeten Sinter- und Reoxidationsbedingungen je nach Materialformulierung entweder die Kornwachstumsanomalie direkt zur Ausbildung grobkörniger keramischer Schichten führen oder beim Erhalt von feinkörnigen Keramiken die Funktionsschichten während der Reoxidation vollkommen durchoxidieren und somit die PTC-Eigenschaft verlieren.

Alternativ könnten zur Erreichung dünner Schichten PTC-Verbundmaterialien auf organischer Basis eingesetzt werden (siehe z. B. KR 2004 01 6677 und US 2003 23 4717). PTC-Verbundmaterialien auf organischer Basis weisen jedoch als entscheidenden Nachteil eine schlechte mechanische und geometrische Stabilität in Folge der großen thermischen Ausdehnung und Schrumpfung bei Erhitzung der hieraus gefertigten Bauteile auf, so dass ihre Anwendung eingeschränkt ist. Durch die Temperaturschwankungen können innere Kontakte zwischen den eingelagerten leitenden Phasen aufbrechen und beim Abkühlen nicht wieder zusammenkommen. Organische Materialien werden im Folgenden nicht weiter betrachtet.

Aus der JP 1143201 A ist ein Verfahren zur Herstellung eines PTC-Widerstandselements bekannt, bei dem eine Vorläufermasse umfassend (Ba_{1-x-y}Sb_{y}Srₓ)TiO₃ mit x≤0.35, y=0.001-0.1 eingesetzt wird.

Es ist die technische Aufgabe der hier betroffenen Erfindung, ein Verfahren, ein Halbleiterkeramikmaterial der eingangs genannten Art, sowie ein Halbleiter-Bauelement zur Verfügung zu stellen, die eine gegenüber dem Stand der Technik dünnere Bauweise erlauben.

Diese Aufgabe wird bei einem Verfahren der eingangs genannten Art durch die Merkmale des unabhängigen Anspruchs 1 gelöst. Bevorzugte Ausführungsbeispiele des erfindungsgemäßen Verfahrens ergeben sich aus den Merkmalen der Ansprüche 2 bis 11. Bei einem Halbleiterkeramikmaterial der eingangs genannten Art wird die Aufgabe mit den kennzeichnenden Merkmalen des unabhängigen Anspruchs 12 gelöst, bei einem Halbleiter-Bauelement mit den Merkmalen des unabhängigen Anspruchs 14. Die Ansprüche 13 und 15 stellen jeweils bevorzugte Ausbildungsbeispiele dar.

Es wird erstmals ein Halbleiterkeramikmaterial mit nichtlinearem PTC-Widerstand präsentiert, dessen mittlere Körnergröße im Submikrometerbereich liegt, wobei die Körnung der Vorläufermasse entsprechend klein, nämlich auf eine mittlere Primärkörnergröße von höchstens 50 nm, weiter bevorzugt von höchstens 20 nm oder auch 10 nm eingestellt wird. Trotz des Körnerwachstums während des Sintervorganges bleibt die mittlere Körnung des fertigen Halbleitermaterials im submikronen Bereich, derart, dass 80 % der Körner kleiner als 800 nm, bevorzugt kleiner als 300 nm, weiter bevorzugt kleiner als 200 nm ist. Das Halbleiterkeramikmaterial kann vorzugsweise auf der Basis von BaTiO₃ gebildet sein.

Das erfindungsgemäße Halbleiter-Bauelement, insbesondere ein Thermistor, weist als Funktionsmaterial das vorgenannte Halbleiterkeramikmaterial auf und ist vorzugsweise in Vielschichtbauweise gebildet. Die geringe Körnergröße des Halbleiterkeramikmaterials erlaubt es, hieraus Funktionsschichten geringster Dicken im Submikrometerbereich zu erzeugen, so dass die damit bestückten Bauteile entsprechend flach gebaut werden können, wobei auch Bauteile in Vielschichtbauweise vorteilhaft in miniaturisierten Schaltungen eingesetzt werden können.

Für die Durchführung des erfindungsgemäßen Verfahrens wird eine ein donatordotiertes ferroelektrisches Material mit Perowskit-Struktur aufweisende Vorläufermasse in reduzierender Atmosphäre bei Temperaturen von höchstens 1.200° C gesintert wird, wobei das gesinterte Material eine Körnung im Submikrometerbereich aufweist, und das gesinterte Material an seinen Korngrenzen bei Temperaturen von höchstens 600 °C reoxidiert wird.

Die submikrone Abmessungen aufweisenden Körner der Vorläufermasse oder des gesinterten Materials werden im Folgenden auch Nanopartikel genannt. Die in der Vorläufermasse eingesetzten keramischen Nanopartikel sollten eine möglichst enge, vorzugsweise monodisperse, Partikelgrößenverteilung mit mittleren Primärkörnergrößen von höchstens 50 nm, bevorzugt höchstens 20 nm und besonders bevorzugt höchstens 10 nm aufweisen.

Die Erfindung basiert auf dem überraschenden Umstand, dass durch den erfindungsgemäß niedrigen Temperaturbereich beim Sintern ein ungewünscht starkes Kornwachstum vermieden werden kann und gleichzeitig durch die niedrigen Temperaturen beim Reoxidieren trotz der submikronen Partikelabmessungen die geforderten PTC-Eigenschaften mit reversibler sprunghafter Widerstandsänderung erreicht werden können.

Die Herstellung der Vorläufermasse kann mit unterschiedlichen Herangehensweisen durchgeführt werden. Je nach dem gewählten Herstellungsverfahren können sich die dem Sintervorgang zuzuführenden Vorläufermassen in Ihrer Struktur voneinander unterscheiden, wobei ihnen gemeinsam ist, dass sie ein für den hier zu erreichenden Zweck geeignetes donatordotiertes ferroelektrisches Material mit Perowskit-Struktur aufweist. Die allgemeine Formel des ferroelektrischen Materials ist AₓB_{y}O₃, wobei x und y rationale Zahlen sind, vorzugsweise ABO₃, wobei "A" z.B. für ein Erdalkalimetall, insbesondere Barium, und "B" z.B. für ein Übergangsmetall, insbesondere Titan, steht. Die A- und/oder B- Positionen können - abgesehen von Dotierstoffen - auch durch mindestens zwei unterschiedliche Elemente besetzt sein, z.B. die A-Position durch Ba und Sr und/oder die B-Position durch Ti und Zr. Denkbar sind an der A-Position neben den Erdalkalimetallen auch Alkalielemente und Bismuth. Es kann auch ein ferroelektrisches Material auf der Basis von Blei-Zirkonat-Titanat (PZT) eingesetzt werden mit PbZr₁₋ₓTiₓO₃, wobei Pb die A-Position und Zr₁₋ₓTiₓ die B-Position darstellt. Entscheidend ist, dass nach dem Sinterprozess eine dotierte Halbleiterkeramik mit der geforderten submikronen Körnung vorliegt.

So kann beispielsweise das zum Stand der Technik bereits dargestellte Mischoxid-Verfahren eingesetzt werden, bei dem einfachere Vorläuferoxide und Vorläuferkarbonate durch Mischen, Malen und reaktives Kalzinieren in die gewünschte Materialformulierung der Vorläufermasse gebracht werden. Die ultrafeine Körnung der Vorläufermasse im Submikrometerbereich kann z.B. durch intensives Heruntermahlen erreicht werden.

Alternativ können nasschemische Verfahren, wie Sol-Gel-, Hydrothermal- und Oxalatbasierten Verfahren, zur Erzeugung einer Vorläufermasse eingesetzt werden. Daneben sind auch die chemische Abscheidung aus der Lösung, (CSD, Chemical Solution Deposition) und die chemische Gasphasenabscheidung (CVD, Chemical Vapour Deposition) geeignet, die unter Verwendung von metallorganischen Beschichtungslösungen erst während des Kalizinierungsprozesses oder erst während des Sinterschrittes die erfindungsgemäßen Nanopartikel generieren.

Eine bevorzugte nasschemische Variante zur Herstellung der Vorläufermasse ist eine Synthese durch Hydrolyse wasserempfindlicher Gemische aus erdalkalimetallorganischer und titanorganischer Verbindungen unter Verwendung von Mikroemulsionen, wobei die Dotierstoffe ebenfalls in Form metallorganischer Verbindungen zugegeben werden. Die Art dieser metallorganischen Verbindungen ist hierbei keinerlei Beschränkungen unterworfen. Bevorzugt werden jedoch Alkoholate der Metalle verwendet.

Prinzipiell können für diese nasschemische Synthese alle Wasser-in-Öl-Mikroemulsionen verwendet werden, die neben den Elementen Wasserstoff, Sauerstoff und Kohlenstoff auch Stickstoff, Bromid und Jodid enthalten können. Bevorzugt werden jedoch kationische Mikroemulsionen eingesetzt, wie beispielsweise aus Druckschrift WO 2007138088 A2 bekannt. Diese Druckschrift betrifft Beschichtungslösungen zur Herstellung von dichten mesoskopischen keramischen Schichten, bestehend aus konzentrierten oxidischen Nanopartikel-Dispersionen, die über eine Hydrolysereaktion aus feuchtigkeitsempfindlichen Präkursor-Lösungen mittels Mikroemulsionen mit kationischen Tensiden hergestellt sind. Die Herstellung von Halbleiterkeramikmaterial mit nichtlinearem PTC-Widerstand ist in dieser Druckschrift nicht angesprochen. Der Offenbarungsgehalt der WO 2007138088 A2 wird hier vollumfänglich einbezogen.

Die Herstellung der Vorläufermasse auf nasschemischem Weg ist insbesondere vorteilhaft in Bezug auf den Einbau der Dotierstoffe. Im nasschemischen Verfahren werden die Partikel der Vorläufermasse aus der auch den Dotierstoff enthaltenden Lösung erzeugt und können daher bereits vor dem Sintern den oder die Dotierstoffe in der gewünschten Konzentration aufweisen. Auf diese Weise erweist sich der Einbau des Dotierungsstoffes als besonders gut kontrollierbar.

Grundsätzlich unabhängig vom Herstellungsverfahren kann für das Halbleiterkeramikmaterial auf BaTiO₃-Basis als Erdalkalimetall neben Barium auch Strontium mit einem maximalen Anteil von 50 Atom-% bezogen auf den Gesamterdalkalimetallgehalt verwendet werden. Bevorzugt wird jedoch nur Barium eingesetzt. Ebenso kann jedoch auf der A-Position neben den Erdalkalielementen auch ein Alkalimetall und Bismut eingesetzt werden. In der resultierenden Keramik sollten diese Anteile 20 Atom-% der A-Position nicht überschreiten.

Das molare Verhältnis zwischen den Atomen für die A-Positionen und denen für die B-Positionen kann bei der Einwaage für die Herstellung der zu sinternden Vorläufermasse zwischen 0,90 und 1,10 liegen, bevorzugt wird jedoch ein stöchiometrisches Verhältnis dieser Metalle eingestellt.

Als Dotierungsmittel kommen grundsätzlich alle Fremdionen mit Donorcharakter wie z.B. Lanthanide, Sb, Nb, Ta, und Y oder Gemische aus diesen Elementen mit einer Konzentration unterhalb 0,5 Atom-% und Fremdionen mit Akzeptorcharakter wie beispielsweise Mn, Fe, Co und Ni mit einer Konzentration unterhalb von 0,5 Atom-% in Frage. Bei Mischoxid-Verfahren zur Herstellung der Vorläufermasse werden Quellenmaterialien mit den Dotierstoffen wie im Stand der Technik der Ausgangsmischung beigefügt. Beim Kalzinieren und hauptsächlich beim Sintern diffundieren die Atome der Dotierstoffe in die Struktur der Halbleiterkeramik hinein. Aufgrund der durch Heruntermahlen erzeugten geringen Korngröße im submikronen Bereich werden Sintertemperaturen oberhalb 1.200 °C nicht benötigt, um die Dotierstoffe in das Korninnere diffundieren zu lassen.

Wird die Vorläufermasse nasschemisch hergestellt, entstehen die Partikel der Vorläufermasse direkt aus der Lösung. Werden die Dotierstoffe in geeigneter Konzentration und Weise in das nasschemische Verfahren integriert, kann sich der Dotierstoff bereits in der Lösung in der gewünschten Konzentration und mit gleichmäßiger Verteilung in die Perowskit-Struktur des Halbleitermaterials einbauen. Eine Diffusion der Dotierstoffe während des Sinterns ist nicht mehr erforderlich. Dies begünstigt einen Verzicht auf den Einsatz eines Sinterflussmittels sowie die niedrigen Temperaturen bis maximal 1.200 °C während des Sintervorganges.

Das Halbleiterkeramikmaterial wird in der Regel in Form von dünnen Schichten eingesetzt. Vorzugsweise wird das Material bereits vor dem Kalzinieren und Sintern in eine Schichtform gebracht. Für die Herstellung einer Schicht aus ultrafeinkörnigem Keramikmaterial können grundsätzlich alle herkömmlichen Verfahren wie beispielsweise Gießen, Ziehen, Aufschleudern oder Tauchen mit Dispersionen, Schlickern oder Pasten, die die gewünschten Nanopartikel enthalten, eingesetzt werden. Insbesondere vorteilhaft ist das Tintenstrahldrucken mit kolloidalen Beschichtungstinten oder der Offsetdruck mit entsprechend angepassten Schlickern oder Pasten.

Die so erzeugten Schichten werden kalziniert, sofern dies noch erforderlich ist, und unter reduzierender Atmosphäre bei Temperaturen zwischen 600° C und 1200° C gesintert. Temperaturen unterhalb 600°C sollten vermieden werden, da dann unerwünschte Restporositäten in der Halbleiterkeramik verbleiben könnten.

Die obere Temperaturbegrenzung dient zur Vermeidung von verstärktem Kornwachstum während des Sinterprozesses. Deshalb wird der Sinterprozess bevorzugt bis zu einer Temperatur von maximal 1000° C, weiter bevorzugt bis 900° C durchgeführt. Vorteilhaft können auch Temperaturen zwischen 600 °C und 800 °C eingesetzt werden.

Einem Kornwachstum steht auch eine möglichst kurze Sinterzeit entgegen, weshalb eine kurze Sinterzeit von z.B. 5 Minuten mit sehr schnellem Aufheizen von z.B. 20 °C/s bevorzugt wird, z. B. unter Verwendung von Hochenergie-Halogenlampen, Diffusions- oder Schnelltemperöfen und Funkenentladungssintern, dem so genannten Plasma spark sintering (SPS).

Im abschließenden Reoxidationsvorgang bei Temperaturen von höchstens 600 °C werden die notwendigen Schottky-Barrieren an den Korngrenzen erzeugt. Die niedrigen Temperaturen gewährleisten, dass die Zonen der Schottky-Barrieren schmal genug und halbleitende Bereiche im Korninneren erhalten bleiben.

Im Folgenden werden beispielhafte Ausführungsformen des erfindungsgemäßen Verfahrens sowie beispielhafte Ausbildungsformen des erfindungsgemäßen Halbleitermaterials dargestellt.

Es zeigt
- Fig. 1:: ein Diagramm der Partikelgrößenverteilung einer La-dotierten Bariumtitanat-Dispersion,
- Fig. 2:: eine transmissionselektronenmikroskopische Aufnahme von La-dotierten BaTiO₃-Nanopartikel,
- Fig. 3:: eine Rasterelektronenmikroskopische Aufnahme einer La-dotierten BaTiO₃-Schicht,
- Fig. 4:: eine Transmissionselektronenmikroskopische Aufnahme einer Schicht einer SPS-verdichteten und reoxidierten Nanokeramik aus La-dotierten BaTiO₃-Nanopartikeln,
- Fig.5:: Ein Diagramm der Korngrößenverteilung in der gesinterten und reoxidierten Schicht gemäß Fig. 4, und
- Fig. 6:: Vergleich der Temperaturabhängigkeit des spezifischen elektrischen Widerstandes einer stöchiometrischen La-dotierten BaTiO₃-Nanokeramik (a) und einer hyperstöchiometrischen La-dotierten BaTiO₃-Nanokeramik (b).

Im Folgenden ist zunächst eine nasschemische Herstellung von Nanopartikeln von Ladotiertem BaTiO₃ dargestellt.

Um 10 g von BaTiO₃-Nanopartikeln mit einer typischen La-Dotierung von 0,2 Atom-% zu erhalten, werden zunächst 5,877 g Barium-Metall unter Schutzgas und bei Raumtemperatur in 200 ml Methanol aufgelöst. Der so erhaltenen Lösung werden tropfenweise 12,173 g Titanisopropoxid zugemischt, wodurch ein exakt stöchiometrisches Verhältnis zwischen Barium und Titan erreicht wird. In dieses Reaktionsgemisch wird zur Dotierung 1,2 ml einer Lösung aus 2,576 g Lanthanpropionat in 100 ml Methanol zugegeben.

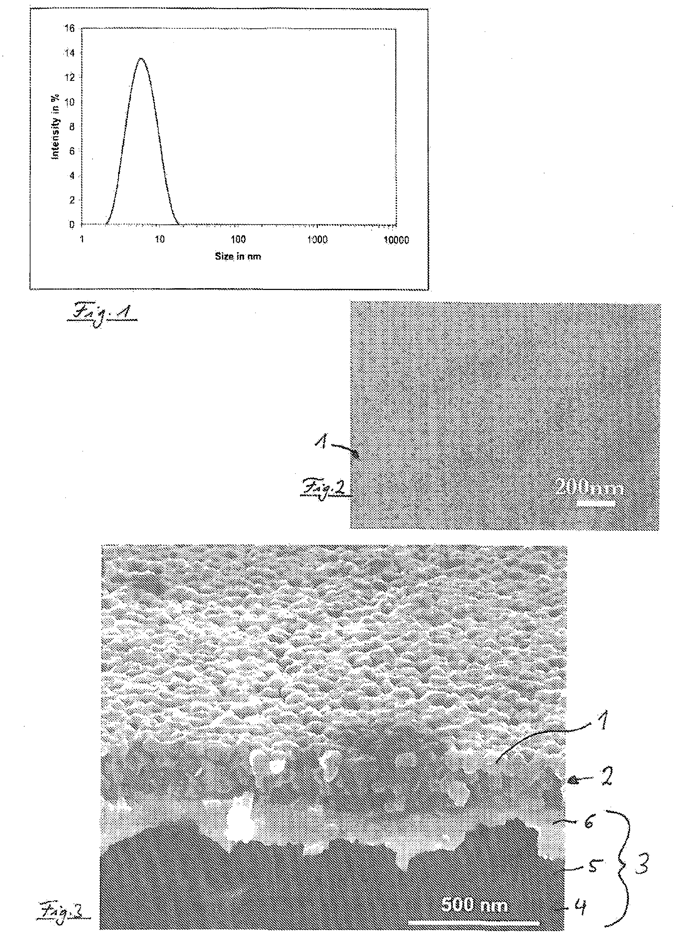

Die anschließende Hydrolyse mit einer stöchiometrischen Menge Wasser erfolgt durch langsames Zutropfen von 20,634 g einer kationischen Mikroemulsion bestehend aus 12,21 Gew.-% 1-Pentanol, 3,74 Gew.-% CTAB (Cethytrimethylammoniumbromid), 11,23 Gew.-% Wasser und 72,82 Gew.-% Cyclohexan. Nach erfolgter vollständiger Zugabe der Mikroemulsion erhält man direkt eine optisch isotrope, nahezu wasserklare La-dotierte Bariumtitanat-Dispersion mit praktisch monodisperser Partikelgrößenverteilung und einem mittleren Teilchendurchmesser von 5 nm. Fig. 1 zeigt in einem Diagramm die Partikelgrößenverteilung innerhalb der Dispersion. Fig. 2 zeigt eine transmissionselektronenmikroskopische Aufnahme der hier als Punkte sichtbaren La-dotierten BaTiO₃-Nanopartikel 1. Die Verteilung der La-Dotierung in den Nanopartikeln 1 ist zu diesem Zeitpunkt bereits gleichmäßig und in der gewünschten Konzentration.

Die so erhaltene kolloidale Lösung der La-dotierten Bariumtitanat-Nanopartikel 1 wird zur Herstellung einer Bariumtitanat-Schicht 2 direkt als Tinte in einem hier nicht dargestellten Tintenstrahldrucker eingesetzt und auf ein Substrat 3 gedruckt (Fig. 3). Alternativ kann die Bariumtitanat-Schicht 2 auch mittels Tauchbeschichtung oder durch Aufschleudern auf ein entsprechendes Substrat abgeschieden werden. Bei diesen Verfahren kann je nach gewünschter Schichtdicke die Massenkonzentration der dispergierten Nanopartikel 1 in diesen Lösungen durch einfaches Verdampfen des Lösemittels bis zu einer Konzentration von 30 Gew.-% variiert werden.

Nach dem Herstellen der Bariumtitanat-Schicht 2 wird diese unter reduzierender Atmosphäre, beispielsweise 4 % H₂ in Argon, bei Temperaturen von etwa 700 °C für 5 Minuten in einem Prozess mit schneller thermischer Bearbeitung (Rapid Thermal Annealing, RTA) gesintert. Hierzu wurden Hochenergiehalogenlampen mit einer Aufheizgeschwindigkeit von 20 °C/sek eingesetzt.

Ausgehend von einer mit Tintenstrahldrucken mit einer 10 Gew.-% Nanopartikel enthaltenden alkoholischen Lösung hergestellten Schicht werden abhängig von den eingestellten Druckerparametern nach dem reduzierenden Sintern Schichtdicken von 50 bis 500 nm erreicht. Fig. 3 zeigt eine ca. 220 nm dicke keramische La-dotierte Bariumtitanat-Schicht 2 mit einer Körnung der Nanopartikel 1 von ca. 80 nm auf einem platinierten Silizium-Substrat 3. Fig. 3 zeigt eine Schicht 4 aus elementarem Si, eine Schicht 5 aus SiO₂ sowie eine Platinschicht 6 des Substrats 3.

Anstelle der Verarbeitung mittels Tintenstrahldrucker oder durch Tauchbeschichtung kann aus der primär erhaltenen Dispersion auch zunächst ein Pulver aus den La-dotierten Nanopartikel erzeugt werden, beispielsweise in einfacher Weise durch vollständiges Verdampfen des Lösemittels, wobei die Nanopartikel lediglich zu größeren lockeren Einheit aggregieren. Das Pulver kann dann zur Herstellung von ultrafeinkörnigen Schichten oder Keramiken mit nichtlinearem PTC-Widerstand weiterverarbeitet werden.

Die Generierung der BaTiO₃-Schichten aus dem Pulver kann durch Gießen und Ziehen entsprechender Schlicker oder Pasten, die diese Nanopartikelpulver enthalten, erfolgen. Der Sintervorgang kann wiederum mit dem oben beschriebenen RTA-Sinterprozess erfolgen.

Aus den Nanopartikelpulvern können aber auch direkt und ohne den Zwischenschritt der Erzeugung von Schlicker oder Pasten ultrafeinkörnige PTC-Keramiken durch eine druckunterstützte Konsolidierung mittels Plasma Spark Sintering (SPS) hergestellt werden.

Unabhängig vom Weg bis zur Sinterung wird die gesinterte Schicht reoxidiert, z.B. indem die Schicht bei Temperaturen bis maximal 600°C einer oxidierenden Atmosphäre ausgesetzt wird. Die oxidierende Atmosphäre kann Luft sein oder eine andere einen geeigneten Sauerstoffpartialdruck aufweisende Atmosphäre.

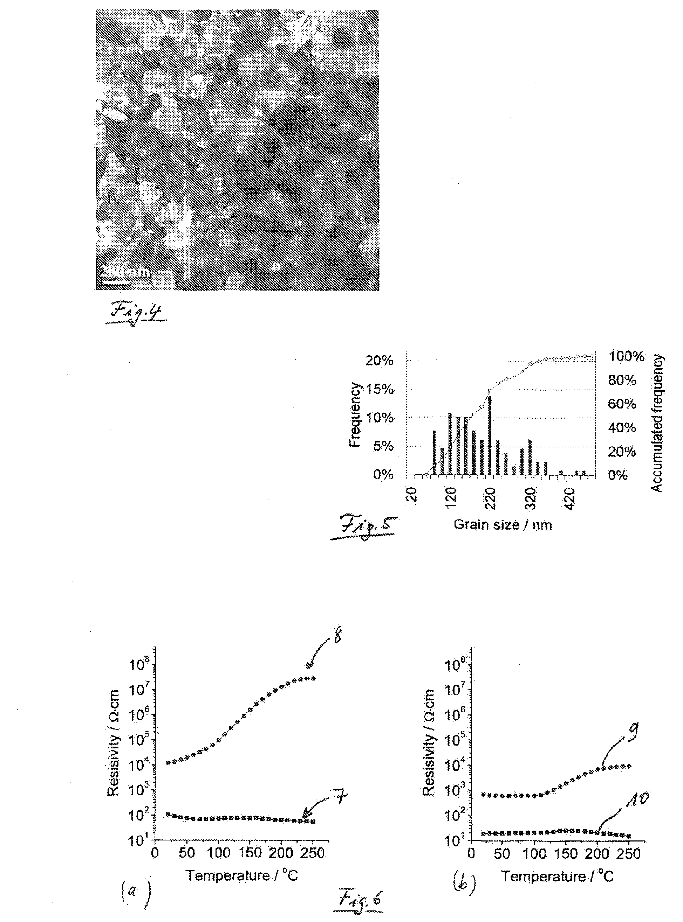

Fig. 4 zeigt eine transmissionselektronenmikroskopische Aufnahme des Gefüges einer SPS-verdichteten und reoxidierten PTC-Nanokeramik, die mit den erfindungsgemäßen La-dotierten stöchiometrischen BaTiO₃-Nanopartikeln erhalten wurde und ein mittlere Körnung zwischen 160 und 220 nm aufwies. Die reduktive Sinterung erfolgte bei 1.000°C unter einem Atmosphären-Druck von 75 MPa. Zur anschließenden Generierung des PTC-Effektes wurde die Keramik lediglich für etwa eine Stunde bei 500 °C an Luft reoxidiert.

Fig. 5 zeigt die Korngrößenverteilung im Gefüge des Materials nach Fig. 4. Die Ordinatengröße "Frequency" gibt die Häufigkeitsverteilung pro Größenklasse an, z.B. für die Größenklasse 210 nm bis 230 nm eine Häufigkeit von etwa 14 %. Die über den Säulen dargestellte Kurve gibt die akkumulierte Häufigkeit wieder.

Für die Ermittlung der PTC-Widerstandscharakteristik wurde die Temperaturabhängigkeit des spezifischen elektrischen Widerstandes dieser ultrafeinkörnigen PTC-Keramik bestimmt. Das Diagramm der Fig. 6 zeigt für eine La-dotierte BaTiO₃-Nanokeramik in der unteren Kurve 7 den temperaturabhängigen Widerstand für die gesinterte Nanokeramik vor dem Reoxidieren und in der oberen Kurve 8 nach dem Reoxidieren. Demnach konnte eine ausreichende Sprunghöhe von 3 Größenordnungen erhalten werden. Diese Nanokeramik wurde mit stöchiometrischer Einwaage des Erdalkalimetalls im Verhältnis zu Titan hergestellt.

Eine mit einem BaO-Überschuss von 3 Mol.-% und damit hyperstöchiometrisch aber ansonsten nach dem gleichen Verfahren hergestellte La-dotierte BaTiO₃-Nanokeramik mit vergleichbarer Körnung zeigte gemäß der oberen Kurve 9 im Diagramm nach Fig. 7 bei der Messung nur einen vergleichsweise geringen Sprung von 1 Größenordnung. Die untere Kurve 10 zeigt den Widerstandsverlauf über die Temperatur vor dem Reoxidieren.

### Bezugszeichenliste

- 1: Nanopartikel
- 2: Bariumtitanat-Schicht
- 3: platiniertes Silizium-Substrat
- 4: Si-Schicht
- 5: SiO₂-Schicht
- 6: Platinschicht
- 7: Widerstandskurve vor dem Reoxidieren (stöchiometrische Probe)
- 8: Widerstandskurve nach dem Reoxidieren (stöchiometrische Probe)
- 9: Widerstandskurve nach dem Reoxidieren (hyperstöchiometrische Probe)
- 10: Widerstandskurve vor dem Reoxidieren (hyperstöchiometrische Probe)

## Patentansprüche

1. Verfahren zur Herstellung eines Halbleiterkeramikmaterials mit einem nichtlinearen elektrischen Widerstand mit positivem Temperaturkoeffizienten, bei dem
a) eine ein donatordotiertes ferroelektrisches Material mit Perowskit-Struktur und der allgemeinen Formel AₓB_{y}O₃ aufweisende Vorläufermasse mit einer mittleren Primärkörnergröße von höchstens 50 nm in reduzierender Atmosphäre bei Temperaturen von höchstens 1.200° C gesintert wird, wobei das gesinterte Material eine mittlere Körnergröße im Submikrometerbereich aufweist und 80% der Körner kleiner als 800 nm sind, und
b) das gesinterte Material an seinen Korngrenzen bei Temperaturen von höchstens 600° C reoxidiert wird.

2. Verfahren nach Anspruch 1, **dadurch gekennzeichnet, dass** das donatordotierte ferroelektrische Material an der A-Position mindestens ein Erdalkalimetall, vorzugsweise zumindest überwiegend Barium, aufweist.

3. Verfahren nach Anspruch 2, **dadurch gekennzeichnet, dass** das donatordotierte ferroelektrische Material an der A-Position neben dem mindestens einen Erdalkalimetall zusätzlich mindestens ein Alkalielement und Bismuth aufweist.

4. Verfahren nach einem der vorherigen Ansprüche, **dadurch gekennzeichnet, dass** das donatordotierte ferroelektrische Material an der B-Position zumindest überwiegend Titan sowie optional Zirkonium aufweist.

5. Verfahren nach einem der vorherigen Ansprüche, **dadurch gekennzeichnet, dass** ausgehend von der allgemeinen Formel ABO₃ die Vorläufermasse aus A und/oder B enthaltenden Quellenmaterialien synthetisiert wird, wobei das Verhältnis von A zu B über alle Quellenmaterialien hinweg mindestens 0.90 und höchstens 1.10 ist.

6. Verfahren nach Anspruch 5, **dadurch gekennzeichnet, dass** das Verhältnis von A zu B über alle Quellenmaterialien hinweg stöchiometrisch ist.

7. Verfahren nach einem der vorhergehenden Ansprüche, **dadurch gekennzeichnet, dass** das für das donatordotierte ferroelektrische Material als Donatoren mindestens ein Metall der Seltenen Erden, vorzugsweise ergänzt durch Niob, Tantal, Antimon und/oder Yttrium eingesetzt wird, wobei die Donatorkonzentration insgesamt höchsten 0,5 Atom-% beträgt.

8. Verfahren nach einem der vorhergehenden Ansprüche, **dadurch gekennzeichnet, dass** für das donatordotierte ferroelektrische Material auch mindestens ein Akzeptorstoff, vorzugsweise Mangan, Eisen, Kobalt und/oder Nickel eingesetzt wird, wobei die Akzeptorkonzentration insgesamt höchsten 0,5 Atom-% beträgt.

9. Verfahren nach einem der vorhergehenden Ansprüche, **dadurch gekennzeichnet, dass** die Vorläufermasse mittels eines nasschemischen Ausfällungsverfahrens synthetisiert wird.

10. Verfahren nach Anspruch 9, **dadurch gekennzeichnet, dass** die Vorläufermasse mittels Hydrolyse wasserempfindlicher Gemische aus erdalkalimetallorganischen und übergangsmetallorganischen Verbindungen synthetisiert wird.

11. Verfahren nach einem der Ansprüche 1 bis 8, **dadurch gekennzeichnet, dass** die Vorläufermasse durch ein Mischoxid-Verfahren synthetisiert und die submikrone Körnung der Vorläufermasse durch Heruntermahlen hergestellt wird.

12. Donatordotiertes Halbleiterkeramikmaterial auf Basis eines donatordotierten ferroelektrischen Metalloxids mit Perowskit-Struktur mit nichtlinearem elektrischem Widerstand mit positivem Temperaturkoeffizienten,
**dadurch gekennzeichnet, dass**
die Körnung des Halbleiterkeramikmaterials eine mittlere Körnergröße im Submikrometerbereich aufweist, wobei 80 % der Körner kleiner als 800 nm sind.

13. Donatordotiertes Halbleiterkeramikmaterial nach Anspruch 12, **dadurch gekennzeichnet, dass** das Metalloxid BaTiO₃ ist.

14. Halbleiter-Bauelement mit einem Halbleiterkeramikmaterial nach Anspruch 12 oder 13.

15. Halbleiter-Bauelement nach Anspruch 14, **dadurch gekennzeichnet, dass** es ein Thermistor, vorzugsweise in Vielschichtbauweise, ist.

## Claims

1. Process for producing a ceramic semiconductor material having a nonlinear electrical resistance with a positive temperature coefficient, wherein
a) a precursor composition comprising a donor-doped ferroelectric material having a Perovskite structure and the general formula AₓB_{y}O₃ and having an average primary particle size of not more than 50 nm is sintered in a reducing atmosphere at temperatures of not more than 1200°C, wherein the sintered material has an average grain size in the submicron range and 80% of the grains are smaller than 800 nm; and
b) the sintered material is reoxidized at its grain boundaries at temperatures of not more than 600°C.

2. Process according to Claim 1, **characterized in that** the donor-doped ferroelectric material has at least one alkaline earth metal, preferably at least predominantly barium, at the A position.

3. Process according to Claim 2, **characterized in that** the donor-doped ferroelectric material has at least one alkali metal element and bismuth in addition to the at least one alkaline earth metal at the A position.

4. Process according to any of the preceding claims, **characterized in that** the donor-doped ferroelectric material has at least predominantly titanium and optionally zirconium at the B position.

5. Process according to any of the preceding claims, **characterized in that**, proceeding from the general formula ABO₃, the precursor composition is synthesized from source material containing A and/or B, wherein the ratio of A to B over all source materials is at least 0.90 and not more than 1.10.

6. Process according to Claim 5, **characterized in that** the ratio of A to B is stoichiometric over all source materials.

7. Process according to any of the preceding claims, **characterized in that** at least one rare earth metal, preferably supplemented by niobium, tantalum, antimony and/or yttrium, is used as donor for the donor-doped ferroelectric material, wherein the total donor concentration is not more than 0.5 atom%.

8. Process according to any of the preceding claims, **characterized in that** at least one acceptor material, preferably manganese, iron, cobalt and/or nickel, is also used for the donor-doped ferroelectric material, where the total acceptor concentration is not more than 0.5 atom%.

9. Process according to any of the preceding claims, **characterized in that** the precursor composition is synthesized by means of a wet-chemical precipitation process.

10. Process according to Claim 9, **characterized in that** the precursor composition is synthesized by hydrolysis of water-sensitive mixtures of alkaline earth metal-organic and transition metal-organic compounds.

11. Process according to any of Claims 1 to 8, **characterized in that** the precursor composition is synthesized by a mixed-oxide process and the submicron grain size of the precursor composition is produced by milling down.

12. Donor-doped ceramic semiconductor material based on a donor-doped ferroelectric metal oxide having a Perovskite structure with a nonlinear electrical resistance having a positive temperature coefficient, **characterized in that** the microstructure of the ceramic semiconductor material has an average grain size in the submicron range, with 80% of the grains being smaller than 800 nm.

13. Donor-doped ceramic semiconductor material according to Claim 12, **characterized in that** the metal oxide is BaTiO₃.

14. Semiconductor component comprising a ceramic semiconductor material according to Claim 12 or 13.

15. Semiconductor component according to Claim 14, **characterized in that** it is a thermistor, preferably having a multilayer construction.

## Revendications

1. Procédé pour la production d'un matériau céramique semi-conducteur présentant une résistance électrique non linéaire avec un coefficient de température positif, dans lequel
a) on fritte une masse de précurseur, présentant un matériau ferroélectrique dopé par des donneurs, doté d'une structure de pérovskite et présentant la formule générale AₓB_{y}O₃, présentant une grosseur des particules primaires d'au plus 50 nm, dans une atmosphère réductrice à des températures d'au plus 1200°C, le matériau fritté présentant une grosseur moyenne de particule dans la plage inférieure au micron et 80% des particules étant inférieurs à 800 nm et
b) le matériau fritté est réoxydé en ses limites de particule à des températures d'au plus 600°C.

2. Procédé selon la revendication 1, **caractérisé en ce que** le matériau ferroélectrique dopé par des donneurs présente, en position A, au moins un métal alcalino-terreux, de préférence au moins principalement du baryum.

3. Procédé selon la revendication 2, **caractérisé en ce que** le matériau ferroélectrique dopé par des donneurs présente, en position A, outre ledit au moins un métal alcalino-terreux, en plus au moins un élément de métal alcalin et du bismuth.

4. Procédé selon l'une quelconque des revendications précédentes, **caractérisé en ce que** le matériau ferroélectrique dopé par des donneurs présente, en position B, au moins principalement du titane ainsi qu'éventuellement du zirconium.

5. Procédé selon l'une quelconque des revendications précédentes, **caractérisé en ce que**, partant de la formule générale ABO₃, la masse de précurseur est synthétisée à partir de matériaux sources contenant A et/ou B, le rapport de A à B sur tous les matériaux sources étant d'au moins 0,90 et d'au plus 1,10.

6. Procédé selon la revendication 5, **caractérisé en ce que** le rapport de A à B sur tous les matériaux sources est stoechiométrique.

7. Procédé selon l'une quelconque des revendications précédentes, **caractérisé en ce qu'**on utilise, comme donneurs pour le matériau ferroélectrique dopé par des donneurs, au moins un métal des terres rares, de préférence complété par du niobium, du tantale, de l'antimoine et/ou de l'yttrium, la concentration en donneurs étant au total d'au plus 0,5% en atome.

8. Procédé selon l'une quelconque des revendications précédentes, **caractérisé en ce qu'**on utilise, pour le matériau ferroélectrique dopé par des donneurs, également au moins une substance accepteuse, de préférence du manganèse, du fer, du cobalt et/ou du nickel, la concentration en accepteur étant au total d'au plus 0,5% en atome.

9. Procédé selon l'une quelconque des revendications précédentes, **caractérisé en ce que** la masse de précurseur est synthétisée au moyen d'un procédé de précipitation chimique par voie humide.

10. Procédé selon la revendication 9, **caractérisé en ce que** la masse de précurseur est synthétisée par hydrolyse de mélanges sensibles à l'eau de composés organiques de métal alcalino-terreux et de composés organiques de métal de transition.

11. Procédé selon l'une quelconque des revendications 1 à 8, **caractérisé en ce que** la masse de précurseur est synthétisée par un procédé d'oxyde mixte et la granulométrie inférieure au micron de la masse de précurseur est réalisée par un broyage de plus en plus fin.

12. Matériau céramique semi-conducteur dopé par des donneurs, à base d'un oxyde de métal ferroélectrique dopé par des donneurs et présentant une structure de pérovskite avec une résistance électrique non linéaire avec un coefficient de température positif, **caractérisé en ce que** la granulométrie du matériau céramique semi-conducteur présente une grosseur moyenne de particule dans la plage inférieure au micron, 80% des particules étant inférieurs à 800 nm.

13. Matériau céramique semi-conducteur dopé par des donneurs selon la revendication 12, **caractérisé en ce que** l'oxyde de métal est le BaTiO₃.

14. Elément semi-conducteur présentant un matériau céramique semi-conducteur selon la revendication 12 ou 13.

15. Elément semi-conducteur selon la revendication 14, **caractérisé en ce qu'**il s'agit d'un thermistor, présentant de préférence un mode de construction multicouche.
